# EUROPÄISCHE PATENTANMELDUNG

(11) **EP 3 076 103 A1**
(43) Veröffentlichungstag der Anmeldung: **05.10.2016**
(21) Anmeldenummer: 16163105.6
(22) Anmeldetag: 31.03.2016
(51) Int. Cl.: F24J 2/52

(54) **TEILANORDNUNG UND ANORDNUNG ZUR HALTERUNG MINDESTENS EINES PHOTOVOLTAIKMODULS SOWIE VERFAHREN ZUR HERSTELLUNG EINER TEILANORDNUNG**

(30) Priorität: 02.04.2015 DE 102015206062
(71) Anmelder: Solibro Hi-Tech GmbH, 06766 Bitterfeld-Wolfen (DE); Zabel, Helmut, 06429 Nienburg (DE)
(72) Erfinder: Zabel, Helmut, 06429 Nienburg (DE); Zabel, Christian, 06429 Nienburg (DE)
(74) Vertreter: Patentanwälte Bressel und Partner mbB

(57) **Zusammenfassung**

Die Erfindung betrifft eine Teilanordnung zur Halterung mindestens eines Photovoltaikmoduls (2), wobei die Teilanordnung (1, 1 a, 1 b) ein erstes Halteprofilelement (4a) und mindestens ein weiteres Halteprofilelement (4b, ..., 4h) umfasst, wobei die Teilanordnung (1) mindestens ein erstes Unterseitenverbindungselement (6) und mindestens ein erstes Oberseitenverbindungselement (7) umfasst, wobei das erste Unterseitenverbindungselement (6) mit Unterseiten (9) des ersten und weiteren Halteprofilelements (4a, 4b) verbunden ist, wobei das erste Oberseitenverbindungselement (7) mit Oberseiten (10) des ersten und weiteren Halteprofilelements (4a, 4b) verbunden ist, wobei das erste Oberseitenverbindungselement (7) derart ausgebildet und mit den Halteprofilelementen (4a, 4b) verbindbar ist, dass ein durch das erste Halteprofilelement (4a) halterbares Photovoltaikmodul (2) und/oder ein durch das weitere Halteprofilelement (4b) halterbares Photovoltaikmodul (2) durch das erste Oberseitenverbindungselement (7) mit dem/den Halteprofilelement/en (4a, 4b) verbindbar ist, sowie eine Anordnung (21) zur Halterung und ein Verfahren zur Herstellung einer Teilanordnung (1, 1 a, 1 b).

## Beschreibung

Die Erfindung betrifft eine Teilanordnung sowie eine Anordnung zur Halterung eines Photovoltaikmoduls sowie ein Verfahren zur Herstellung einer Teilanordnung.

Bei der Montage von Photovoltaikmodulen auf Freiflächen werden in der Regel sogenannte Unterkonstruktionen benötigt, an der die Photovoltaikmodule in einer gewünschten Lage und mit einer gewünschten Ausrichtung montiert werden können. Für einen gewünschten Montageort müssen daher in der Regel Elemente der Unterkonstruktion eigens hergestellt oder für die Montage angepasst werden. Dies bedingt eine kosten- und zeitintensive Bereitstellung einer solchen Unterkonstruktion.

Die JP 2014-037685 A offenbart ein Verfahren zur Installation eines Photovoltaikmoduls. Hierbei werden Trageelemente genutzt, wobei einige dieser Tragelemente durch Abdeckelemente abgedeckt werden.

Die EP 2 642 218 A1 offenbart eine modulare Vorrichtung zur architektonischen Integration von rahmenlosen Solarmodulen.

Die DE 10 2011 007 521 A1 offenbart eine Unterkonstruktion für eine SolarmodulFreilandanordnung, insbesondere einer Anordnung rahmenloser Solarmodule. Diese umfasst Modulträger und obere Verbindungswinkel zur Verbindung von Modulträgern.

Die DE 20 2009 014 723 U1 offenbart eine in Stahl gefertigte Solar-Modul-Trägerkonstruktion, die aus zwei Bögen von unterschiedlicher Höhe besteht.

Die US 2010/096073 A offenbart ein Verfahren und eine Vorrichtung zur Solarmodulinstallation.

Es stellt sich das technische Problem, eine Teilanordnung und eine Anordnung zur Halterung eines Photovoltaikmoduls sowie ein Verfahren zur Herstellung einer Teilanordnung zu schaffen, die eine kostengünstige und zeitlich schnelle Bereitstellung einer Tragkonstruktion für Photovoltaikmodule in einer gewünschten Lage und mit einer gewünschten Ausrichtung ermöglichen.

Die Lösung des technischen Problems ergibt sich durch die Gegenstände mit den Merkmalen der Ansprüche 1, 14 und 17. Weitere vorteilhafte Ausgestaltungen der Erfindung ergeben sich aus den Unteransprüchen.

Es ist eine Grundidee der Erfindung, ein modulares System zu schaffen, welches eine einfache Bereitstellung verschieden ausgebildeter Tragkonstruktionen ermöglicht, wobei gleichzeitig eine hohe Stabilität der Tragkonstruktion gewährleistet wird.

Vorgeschlagen wird eine Teilanordnung zur Halterung mindestens eines Photovoltaikmoduls. Das Photovoltaikmodul kann auch als Solarmodul bezeichnet werden. Das Photovoltaikmodul kann insbesondere ein gerahmtes Photovoltaikmodul sein. Der Rahmen kann hierbei ein metallischer Rahmen sein, der mit einer elektrisch isolierenden Isolationsschicht, beispielsweise einer Eloxalschicht, beschichtet ist. Die Teilanordnung kann Teil einer Anordnung zur Halterung eines solchen Photovoltaikmoduls sein.

Die Teilanordnung umfasst ein erstes Halteprofilelement und mindestens ein weiteres Halteprofilelement. Ein Halteprofilelement bezeichnet hierbei ein Element zur Halterung des Photovoltaikmoduls. Ein solches Halteprofilelement kann insbesondere aus Metall, vorzugsweise Aluminium, ausgebildet sein. Ein Halteprofilelement kann in einem sogenannten Strangpress-Verfahren hergestellt werden. Ein Halteprofil kann hierbei ein länglich ausgebildetes Element sein, wobei ein Halteprofilelement eine vorbestimmte Länge aufweisen kann. Die Länge kann beispielsweise in einem Bereich von 500 mm bis 1500 mm liegen.

Ein Halteprofilelement kann mindestens einen Halteabschnitt zur Halterung des Photovoltaikmoduls aufweisen oder ausbilden. Der Halteabschnitt kann beispielsweise als Abschnitt zur Auflage oder Anlage des Photovoltaikmoduls, insbesondere eines Randabschnittes oder eines Abschnitts des Rahmens an einer Seite des Photovoltaikmoduls, ausgebildet sein. So kann das Halteprofilelement beispielsweise eine Auflagefläche zur Auflage einer Unterseite des Randabschnittes oder eines Teils des Randabschnittes, insbesondere einer Unterseite des Rahmens, aufweisen oder ausbilden.

Das Halteprofilelement kann hierbei mehrere Teilelemente umfassen, die nicht notwendigerweise verbunden sein müssen. Allerdings werden durch die Teilelemente eines Halteprofilelements jeweils Abschnitte der gleichen Seite des Photovoltaikmoduls gehaltert.

Das erste und das mindestens ein weitere Halteprofilelement können die gleiche Ausbildung aufweisen.

Selbstverständlich kann die Teilanordnung mehr als zwei Halteprofilelemente, beispielsweise bis zu 10 Halteprofilelemente umfassen.

Erfindungsgemäß umfasst die Teilanordnung mindestens ein erstes Unterseitenverbindungselement und mindestens ein erstes Oberseitenverbindungselement. Ein Unterseitenverbindungselement kann auch als sogenannter Untergurt und ein Oberseitenverbindungselement als sogenannter Obergurt bezeichnet werden.

Ein Halteprofilelement kann eine Unterseite und eine Oberseite aufweisen. An oder in der Unter- bzw. Oberseite können Mittel zur Befestigung des Unterseitenverbindungselements bzw. des Oberseitenverbindungselements ausgebildet oder angeordnet sein.

Das Unterseitenverbindungselement ist mit Unterseiten des ersten und weiteren Halteprofilelements verbunden. Dies kann bedeuten, dass sowohl die Unterseite des ersten Halteprofilelements als auch die Unterseite des weiteren Halteprofilelements mit dem Unterseitenverbindungselement verbunden ist. Weiter kann dies bedeuten, dass das Unterseitenverbindungselement an der Unterseite des Halteprofilelements mit dem Halteprofilelement verbunden ist.

Im Sinne dieser Erfindung kann das Merkmal "verbunden" bedeuten, dass eine kraftschlüssige, stoffschlüssige und/oder formschlüssige Verbindung vorliegt. Die Verbindung kann hierbei eine lösbare oder unlösbare Verbindung sein.

Weiter ist das erste Oberseitenverbindungselement mit Oberseiten des ersten und weiteren Halteprofilelements verbunden. Dies kann bedeuten, dass das erste Oberseitenverbindungselement sowohl mit der Oberseite des ersten als auch mit der Oberseite des weiteren Halteprofilelements verbunden ist. Weiter kann dies bedeuten, dass das Oberseitenverbindungselement an der Oberseite des Halteprofilelements mit dem Halteprofilelement verbunden ist.

Das Oberseitenverbindungselement und/oder das Unterseitenverbindungselement kann/können z.B. jeweils eine oder mehrere Durchgangsöffnung(en) und/oder eine oder mehrere Gewindebohrung(en) aufweisen, die zur Verbindung des Elements mit der Oberseite bzw. Unterseite dienen.
Somit ergibt sich, dass die Halteprofilelemente über die Unterseitenverbindungselemente als auch über die Oberseitenverbindungselemente miteinander verbunden sind. Sind die Halteprofilelemente derart miteinander verbunden, so liegt ein verbundener Zustand vor.

Hierbei ist möglich, dass keine unmittelbare Verbindung zwischen den Halteprofilelementen besteht. Allerdings ist auch nicht ausgeschlossen, dass eine solche Verbindung herstellbar ist.

Weiter ist das erste Oberseitenverbindungselement derart ausgebildet und mit den Halteprofilelementen verbindbar, dass ein durch das erste Halteprofilelement halterbares Photovoltaikmodul und/oder ein durch das weitere Halteprofilelement halterbares Photovoltaikmodul durch das erste Oberseitenverbindungselement mit dem/den Halteprofilelement/en verbindbar ist. Insbesondere kann das erste Oberseitenverbindungselement derart ausgebildet und mit den Halteprofilelementen verbindbar sein, dass ein oder zwei Photovoltaikmodul(e) an dem ersten Halteprofilelement und/oder ein weiteres oder zwei weitere Photovoltaikmodul(e) an dem weiteren Halteprofilelement befestigt werden kann. Es ist beispielsweise vorstellbar, dass das erste Oberseitenverbindungselement Kontaktflächen zur Kontaktierung einer Oberseite eines oder zweier Photovoltaikmoduls/e, insbesondere einer Oberseite eines Randabschnittes oder Rahmens des/der Photovoltaikmoduls/e, aufweist. Weiter kann das Oberseitenverbindungselement einen Verbindungsabschnitt zur Verbindung dieser Kontaktabschnitte aufweisen. Wird das Oberseitenverbindungselement mit der Oberseite des ersten und/oder weiteren Halteprofilelements verbunden, so können die Kontaktabschnitte jeweils in Kontakt mit einem Photovoltaikmodul treten. Z.B. kann ein Photovoltaikmodul während des Verbindens des Oberseitenverbindungselements mit den Halteprofilelementen zwischen den Halteabschnitt des Halteprofilelements und den jeweiligen Kontaktabschnitt des Oberseitenverbindungselements geklemmt werden.

Somit erfolgt die Befestigung des Photovoltaikmoduls an den Halteprofilelementen zumindest teilweise mittels des Oberseitenverbindungselements.

Das Oberseitenverbindungselement und das Unterseitenverbindungselement können als separate Bauteile ausgebildet sein. Durch das Vorsehen des Unterseiten- und Oberseitenverbindungselements kann in vorteilhafter Weise sowohl eine mechanische Stabilität der aus den Halteprofilelementen bestehenden Tragkonstruktion, insbesondere eine hohe Biegesteifigkeit, gewährleistet werden, während gleichzeitig eine zuverlässige Befestigung eines Photovoltaikmoduls an der Tragkonstruktion durch das Oberseitenverbindungselement ermöglicht wird.

Selbstverständlich kann die Teilanordnung mehr als ein Unterseitenverbindungselement und mehr als ein Oberseitenverbindungselement umfassen. Umfasst die Teilanordnung beispielsweise n Halteprofilelemente, so kann die Teilanordnung n-1 Unterseitenverbindungselemente und n-1 Oberseitenverbindungselemente umfassen.

In einer weiteren Ausführungsform sind das erste und weitere Halteprofilelement mit einem gewünschten Winkel abgewinkelt zueinander angeordnet. Diese Anordnung kann insbesondere im verbundenen Zustand gegeben sein. Der gewünschte Winkel kann einen Winkel zwischen zentralen Längsachsen der Halteprofilelemente bezeichnen. Dieser Winkel kann insbesondere größer als 0° und kleiner als 180° sein. Vorzugsweise liegt der Winkel in einem Winkelbereich von 5° bis 30°.

Hierdurch wird in vorteilhafter Weise gewährleistet, dass die an den Halteprofilelementen befestigbaren Photovoltaikmodule mit einer gewünschten Ausrichtung relativ zueinander und/oder relativ zum Erdboden montiert werden können, wenn eine die Teilanordnung zur Halterung umfassende Anordnung zur Halterung an einem Fundament, beispielsweise im Erdboden, befestigt wird.

In einer weiteren Ausführungsform ist mindestens ein freies Ende des ersten und weiteren Halteprofilelements abgeschrägt. Dass Enden des ersten und weiteren Halteprofilelements abgeschrägt sind, kann bedeuten, dass endseitige Stirnflächen der Halteprofilelemente einen vorbestimmten Winkel größer als 0°, jedoch kleiner als 90° mit der zentralen Längsachse des entsprechenden Halteprofilelements einschließen. Im verbundenen Zustand können die abgeschrägten Enden der Halteprofilelemente aneinander anliegen.

Insbesondere können freie Enden der Halteprofilelemente derart abgeschrägt sein, dass diese im verbundenen Zustand mit dem vorhergehend erläuterten gewünschten Winkel abgewinkelt zueinander angeordnet sind bzw. aneinander anliegen. Hierdurch ergibt sich in vorteilhafter Weise eine einfache Montage der Halteprofilelemente in einer abgewinkelten Anordnung.

In einer weiteren Ausführungsform umfasst die Teilanordnung ein Element zur Einstellung des Winkels zwischen zwei Halteprofilelementen. Das Element zur Einstellung des Winkels ist zwischen freien Enden, insbesondere stirnseitigen Enden, der Halteprofilelemente angeordnet. Beispielsweise kann das Element zur Einstellung zwei Kontaktflächen aufweisen, die mit dem gewünschten Winkel abgewinkelt zueinander angeordnet sind. An diesen Kontaktflächen können jeweils stirnseitige Endflächen des ersten und weiteren Halteprofilelements anliegen. Das Element zur Einstellung des Winkels kann hierbei als Voll- oder Hohlprofil ausgebildet sein. Weiter kann das Element zur Einstellung des Winkels aus einem elektrisch leitfähigen Material, insbesondere Metall, vorzugsweise Aluminium, ausgebildet sein. Weiter beispielsweise kann das Element zur Einstellung des Winkels ein im Querschnitt dreieckförmiges oder trapezförmiges Profil aufweisen.

Es ist vorstellbar, dass das Unterseitenverbindungselement und/oder das Oberseitenverbindungselement mit dem Element zur Einstellung des Winkels verbunden ist. Dies ist jedoch nicht zwingend.

Hierdurch ergibt sich in vorteilhafter Weise, dass Halteprofilelemente ohne abgeschrägte Enden zur Herstellung einer Anordnung zur Halterung eines Photovoltaikmoduls verwendet werden können, wobei dennoch eine einfache Montage der Halteprofilelemente mit einer abgewinkelten Anordnung ermöglicht wird.

Durch die Verwendung von Halteprofilelementen mit nicht abgeschrägten Enden ergibt sich in vorteilhafter Weise eine einfachere und kostengünstigere Herstellung der Halteprofilelemente, insbesondere im Rahmen eines Strangpressverfahrens mit nachfolgendem Zuschnitt, der rechtwinklig zum Halteprofilelement durchgeführt wird.

In einer weiteren Ausführungsform ist/sind das erste Unterseitenverbindungselement und/oder das erste Oberseitenverbindungselement als Winkelprofilelement ausgebildet. Beispielsweise kann ein Verbindungselement zwei Abschnitte aufweisen, wobei diese Abschnitte abgewinkelt zueinander angeordnet sind. Diese Abschnitte können insbesondere mit gewünschten Winkel abgewinkelt zueinander angeordnet sein. Weiter können diese Abschnitte die vorhergehend erläuterten Kontaktabschnitte aufweisen oder ausbilden.

Bevorzugt ist/sind das Oberseitenverbindungselement und/oder das Unterseitenverbindungselement als Blechprofil oder als Edelstahlprofil ausgebildet. Dieses Profil kann beispielsweise eine vorbestimmte Stärke, beispielsweise aus einem Bereich von 3 mm bis 8 mm, aufweisen.

Hierdurch ergibt sich in vorteilhafter Weise eine zuverlässige Verbindung der Halteprofilelemente als auch eine zuverlässige Befestigung der Solarmodule.

In einer weiteren Ausführungsform weist das erste Oberseitenverbindungselement mindestens ein Kontaktmittel zur elektrischen Kontaktierung eines Rahmens des Photovoltaikmoduls auf oder bildet ein solches aus. Das Kontaktmittel kann insbesondere derart ausgebildet sein, dass der elektrisch leitfähige Teil des Rahmens kontaktierbar ist. Somit kann der Rahmen des Photovoltaikmoduls mit einem Potential der Teilanordnung verbunden werden. Ist die Teilanordnung mit einem Referenzpotential, beispielsweise einem Erdpotential, verbunden, so kann hierdurch eine elektrische Verbindung zwischen dem Rahmen und diesem elektrischen Referenzpotential erfolgen. Hierdurch ergibt sich in vorteilhafter Weise eine einfache Erdung der gehalterten Photovoltaikmodule.

In einer weiteren Ausführungsform weist das Oberseitenverbindungselement einen Kontaktabschnitt, insbesondere eine Kontaktfläche, zur mechanischen Kontaktierung eines Rahmens des Photovoltaikmoduls auf oder bildet einen solchen aus. Das Kontaktmittel zur elektrischen Kontaktierung wird von dem Kontaktabschnitt ausgebildet oder ist an diesem angeordnet.

Vorzugsweise kann ein Randbereich einer als Kontaktabschnitt ausgebildeten Kontaktfläche abgekantet sein. Bei der Befestigung des Oberseitenverbindungselements an einem Halteprofilelement kann die Kontaktfläche in mechanischen Kontakt mit der Oberfläche des Rahmens treten, wobei der abgekantete Randabschnitt die erläuterte Isolationsschicht durchdringt und in mechanischen als auch elektrischen Kontakt mit dem elektrisch leitfähigen Teil des Rahmens tritt.

Selbstverständlich sind auch alternative Ausbildungen eines solchen Kontaktmittels vorstellbar, beispielsweise ein zackenförmig ausgebildeter Randbereich, ein gebogener Randbereich oder eine unebene Oberflächenstrukturierung des Oberseitenverbindungselementes, insbesondere deren Kontaktfläche. Beispielsweise kann mindestens eine pyramidenförmige oder eine spitz zulaufende Erhebungen auf der Kontaktfläche vorgesehen sein.

In einer weiteren Ausführungsform bestehen die Halteprofilelemente und das Oberseitenverbindungselement aus elektrisch leitfähigem Material. Hierdurch wird in vorteilhafter Weise gewährleistet, dass der elektrisch leitfähige Teil eines Rahmens über ein Oberseitenverbindungselement und Halteprofilelement der Teilanordnung mit einem gewünschten Referenzpotential verbunden werden kann.

Selbstverständlich, jedoch nicht zwingenderweise, kann auch das Unterseitenverbindungselement aus einem elektrisch leitfähigen Material ausgebildet sein.

In einer weiteren Ausführungsform ist die Teilanordnung elektrisch mit einem Referenzpotential, beispielsweise einem Erdpotential, verbunden. Dies kann beispielsweise über eine elektrische Verbindung eines der Halteprofilelemente und/oder eines der Oberseitenverbindungselemente und/oder eines der Unterseitenverbindungselemente mit dem Referenzpotential erfolgen. Hierdurch kann in vorteilhafter Weise die Teilanordnung geerdet werden, was eine Betriebssicherheit in vorteilhafter Weise erhöht.

In einer weiteren Ausführungsform umfasst die Anordnung mindestens ein End-Unterseitenverbindungselement, wobei das End-Unterseitenverbindungselement mit einer Unterseite eines End-Halteprofilelements verbunden ist. Weiter ist das End-Unterseitenverbindungselement mit einem Fundament verbunden.

Ein End-Halteprofilelement kann hierbei ein Halteprofilelement der Teilanordnung bezeichnen, welches ein Ende aufweist, welches nicht über ein Unterseitenverbindungselement und/oder ein Oberseitenverbindungselement mit einem weiteren Halteprofilelement verbunden ist. Dieses kann somit in vorteilhafter Weise über das End-Unterseitenverbindungselement mit einem Fundament oder einer weiteren Tragstruktur verbunden werden. Das End-Unterseitenverbindungselement kann hierbei wie ein Unterseitenverbindungselement ausgebildet sein. In diesem Fall kann die Teilanordnung neben einem oder mehreren Unterseitenverbindungselementen auch noch ein oder zwei End-Unterseitenverbindungselemente umfassen.

Selbstverständlich ist es auch vorstellbar, die Verwendung mit einem Fundament über ein End-Oberseitenverbindungselement vorzunehmen.

Alternativ sind selbstverständlich andere Ausführungsformen zur Befestigung der Teilanordnung an dem Fundament vorstellbar. Beispielsweise kann ein Gründungselement, beispielsweise eine Gründungsplatte, an einem freien Ende eines End-Halteprofilelements befestigt werden.

In einer weiteren Ausführungsform sind Halteprofilelemente der Teilanordnung derart ausgebildet und angeordnet, dass die Halteprofilelemente eine im Wesentlichen bogenförmige, insbesondere halbkreisförmige, Teilanordnung zur Halterung ausbilden. Dass die Halteprofilelemente der Teilanordnung derart ausgebildet und angeordnet sind, kann bedeuten, dass die Teilanordnung eine vorbestimmte Anzahl von Halteprofilelementen einer vorbestimmten Länge umfasst, die jeweils mit einem gewünschten Winkel abgewinkelt zueinander angeordnet sind, um die im Wesentlichen bogenförmige Teilanordnung bereitzustellen.

Hierbei bezeichnet eine im Wesentlichen bogenförmige Teilanordnung eine vieleckförmige Struktur, insbesondere ein Polygon. Ein solches Polygon kann gleichseitig oder gleichwinklig sein. Durch die in einer solchen vieleckförmigen Struktur aneinander angeordneten Halteprofilelemente wird die ideale Bogen- oder Kreisform angenähert, jedoch nicht erreicht.

Hierdurch ergibt sich in vorteilhafter Weise, dass Photovoltaikmodule mit unterschiedlicher Neigung und somit Ausrichtung montiert werden können. Insbesondere ermöglicht die Teilanordnung die Herstellung eines Photovoltaiksystems, welches eine im Vergleich mit dachmontierten Photovoltaiksystemen eine flache Tagesganglinie, jedoch keine steile Peak-Ertragskurve aufweist.

In einer weiteren Ausführungsform ist eine Länge eines Halteprofilelements größer als die Länge der durch das Halteprofilelement gehalterten Seite des Photovoltaikmoduls oder gleich dieser Länge. Die gehalterte Seite kann eine Längsseite oder Stirnseite des Photovoltaikmoduls sein.

Gehaltert kann bedeuten, dass die Seite oder ein an der Seite angeordneter Rahmen bzw. Abschnitt des Rahmens in, an oder auf dem erläuterten Halteabschnitt des Halteprofilelements angeordnet ist.

In dem Fall, dass die Länge des Halteprofilelements größer als die oder gleich der Länge der durch das Halteprofilelement gehalterten Seite des Photovoltaikmoduls ist, kann die Seite oder der an der Seite angeordnete Rahmen bzw. Abschnitt des Rahmens entlang seiner gesamten Länge in, an oder auf dem erläuterten Halteabschnitt des Halteprofilelements angeordnet sein. In diesem Fall kann die Stabilität der resultierenden Anordnung durch das Halteprofilelement verbessert werden.

Alternativ ist die Länge eines Halteprofilelements kleiner als die Länge der durch das Halteprofilelement gehalterten Seite des Photovoltaikmoduls. In diesem Fall kann die Seite oder der an der Seite angeordnete Rahmen bzw. Abschnitt des Rahmens nicht entlang seiner gesamten Länge in, an oder auf dem erläuterten Halteabschnitt des Halteprofilelements angeordnet sein. In diesem Fall kann die Stabilität der resultierenden Anordnung durch den Rahmen gewährleistet werden.

Umfasst das Halteprofilelement mehrere Teilelemente, so kann die Länge jedes Teilelements oder die Summe der Längen aller Teilelemente kleiner als die Länge der durch das Halteprofilelement gehalterten Seite des Photovoltaikmoduls sein.

In einer weiteren Ausführungsform weist ein Halteprofilelement an der Unterseite eine Aufnahmenut auf, wobei das Unterseitenverbindungselement in oder außerhalb der Aufnahmenut angeordnet ist.

Weiter vorgeschlagen wird eine Anordnung zur Halterung mindestens eines Photovoltaikmoduls. Die Anordnung umfasst hierbei mindestens zwei Teilanordnungen gemäß einer der in dieser Erfindung beschriebenen Ausführungsformen.

Weiter ist die erste Teilanordnung beabstandet zu einer zweiten Teilanordnung angeordnet. Der Abstand kann an eine Länge oder Breite eines Photovoltaikmoduls angepasst sein. Zwischen den Teilanordnungen können Photovoltaikmodule angeordnet werden. Ein Photovoltaikmodul, insbesondere ein erster Randabschnitt, vorzugsweise ein erster Abschnitt des Rahmens, kann an einem Halteprofilelement der ersten Teilanordnung angeordnet und mittels eines Oberseitenverbindungselements der ersten Teilanordnung an diesem Halteprofilelement befestigt werden. Weiter kann dieses Photovoltaikmodul, insbesondere ein weiterer Randabschnitt, vorzugsweise ein weiterer Abschnitt des Rahmens, an einem Halteprofilelement der zweiten Teilanordnung angeordnet werden und mit diesem Halteprofilelement über das Oberseitenverbindungselement der zweiten Teilanordnung verbunden werden. Die an den Halteprofilelementen angeordneten Abschnitte des Solarmoduls können insbesondere Abschnitte von gegenüberliegenden Längs- oder Querseiten des Solarmoduls sein. Selbstverständlich kann die Anordnung zur Halterung mehr als zwei Teilanordnungen umfassen.

Hierdurch ergibt sich in vorteilhafter Weise eine stabile Anordnung zur Halterung von Photovoltaikmodulen, bei der die mechanische Stabilität durch Integration des Photovoltaikmoduls, insbesondere dessen Rahmens, in die Montagekonstruktion gewährleistet wird. Weiter wird ein Montageaufwand deutlich verringert. Die Teilanordnungen sowie das montierte Photovoltaikmodul bilden in vorteilhafter Weise ein selbst aussteifendes, statisch tragendes System.

Hierbei können die verschiedenen Teilanordnungen ausschließlich über das zwischen den Teilanordnungen angeordnete Photovoltaikmodul verbunden sein.

In einer weiteren Ausführungsform bildet mindestens ein Unterseitenverbindungselement der ersten Teilanordnung ein Unterseitenverbindungselement der zweiten Teilanordnung. Alternativ oder kumulativ bildet mindestens ein Oberseitenverbindungelement der ersten Teilanordnung ein Oberseitenverbindungselement der zweiten Teilanordnung. Vorstellbar ist z.B., dass ein oder mehrere, jedoch nicht alle, Unterseiten- und/oder Oberseitenverbindungselement(e) sowohl ein Verbindungselement der ersten als auch der weiteren Teilanordnung bildet. Hierbei kann ein solches Verbindungselement sich von der ersten Teilanordnung zur zweiten Teilanordnung erstrecken. Hierdurch wird in vorteilhafter Weise eine mechanische Stabilität der Anordnung erhöht und eine Montage vereinfacht. Selbstverständlich kann ein solches Verbindungselement auch ein Verbindungselement von mehr als zwei Teilanordnungen sein.

In einer weiteren Ausführungsform wird mindestens ein Photovoltaikmodul von einem Halteprofilelement der ersten Teilanordnung und einem Halteprofilelement der zweiten Teilanordnung gehaltert. Insbesondere kann das mindestens eine Photovoltaikmodul über ein Oberseitenverbindungselement an den entsprechenden Halteprofilelementen befestigt oder mit diesen mechanisch verbunden werden. Eine derartige Anordnung kann auch als Photovoltaiksystem bezeichnet werden.

Weiter vorgeschlagen wird ein Verfahren zur Montage einer Teilanordnung zur Halterung mindestens eines Photovoltaikmoduls. Das Verfahren dient hierbei zur Herstellung einer Teilanordnung gemäß einer der in dieser Erfindung beschriebenen Ausführungsformen. Somit kann dieses Verfahren alle hierzu notwendigen Verfahrensschritte umfassen.

Insbesondere werden ein erstes Halteprofilelement, mindestens ein weiteres Halteprofilelement, mindestens ein erstes Unterseitenverbindungselement und mindestens ein Oberseitenverbindungselement bereitgestellt. Das erste Unterseitenverbindungselement wird mit Unterseiten des ersten und weiteren Halteprofilelements verbunden. Weiter wird das erste Oberseitenverbindungselement mit Oberseiten des ersten und weiteren Halteprofilelements verbunden.

Hierdurch ergibt sich in vorteilhafter Weise eine einfache Montage einer biegesteifen Tragkonstruktion für Photovoltaikmodule. Durch die Verbindung über die Unterseitenverbindungselemente und/oder Oberseitenverbindungselemente wird eine biegesteife Teilanordnung bereitgestellt.

In einer weiteren Ausführungsform wird vor der Verbindung des Oberseitenverbindungselements mit den Oberseiten des ersten und weiteren Halteprofilelements jeweils mindestens ein Photovoltaikmodul an den Halteprofilelementen angeordnet. Vorstellbar ist, dass zwei Photovoltaikmodule an einem Halteprofilelement angeordnet werden. Beispielsweise kann mindestens ein Photovoltaikmodul, insbesondere ein Randabschnitt, vorzugsweise ein Abschnitt des Rahmens, auf oder an oder in entsprechenden Halteabschnitten eines der Halteprofilelemente angeordnet werden. Dann werden durch die Verbindung des Oberseitenverbindungselements mit den Oberseiten der Halteprofilelemente die Photovoltaikmodule mit den Halteprofilelementen verbunden. Hierdurch kann das Photovoltaikmodul eingespannt werden. Insbesondere können verschiedene Abschnitte eines Photovoltaikmoduls, insbesondere verschiedene Randabschnitte, vorzugsweise verschiedene Abschnitte des Rahmens, mit Halteprofilelementen verschiedener Teilanordnungen verbunden werden, wodurch ein biegesteifes, selbsttragendes und statisch tragfähiges Photovoltaiksystem bereitgestellt wird.

In einer weiteren Ausführungsform wird durch die Verbindung des Oberseitenverbindungselements mit den Oberseiten der Halteprofilelemente ein Rahmen mindestens eines Photovoltaikmoduls elektrisch kontaktiert. Dies kann beispielsweise durch die erläuterte Abkantung eines Randabschnitts einer Kontaktfläche des Oberseitenverbindungselements erfolgen.

Zusammenfassend ergibt sich ein minimalistisches, statisch tragendes, baukastenartig aufbaubares und somit erweiterbares System zur Halterung von Photovoltaikmodulen. In diesem System können Rahmen der Module mit einem gemeinsamen Referenzpotential, vorzugsweise einem Erdpotential, verbunden sein. Weiter kann eine Kraftableitung von auf die Photovoltaikmodule wirkenden Zug- oder Druckkräften über die Oberseitenverbindungselemente und Unterseitenverbindungselemente in die Halteprofilelemente erfolgen, die dann diese Kräfte wiederum in ein Fundament ableiten können.

Die vorgeschlagene Teilanordnung und Anordnung zur Halterung eines Photovoltaikmoduls kann insbesondere zur Herstellung von kleineren Solaranlagen mit flacher Tagesgangertragskurve dienen.

Vorzugsweise ist das Oberseitenverbindungselement und/oder das Unterseitenverbindungselement ein Edelstahlblech. Dieses ist materialfest, bietet einen hohen Korrosionsschutz und eine hohe elektrische Leitfähigkeit.

Die vorgeschlagenen Ausführungsformen ermöglichen in vorteilhafter Weise eine Herstellung einer Tragkonstruktion, die für verschiedene Anwendungsfälle variiert und auf diese angepasst werden kann. Durch die modulare Erweiterbarkeit ist eine hohe Flexibilität bei der Montage gegeben. Gleichzeitig können Herstellungskosten durch die Verwendung standardisierter Bauteile reduziert werden.

Die vorgeschlagene Teilanordnung und Anordnung ermöglicht auch in vorteilhafter Weise die Verwendung von Photovoltaikmodulen mit einem hohen Modulgewicht, da derartige Photovoltaikmodule bei der vorgeschlagenen Anordnung eine hohe mechanische Last-und Schwingungsstabilität bereitstellen. Auch können Photovoltaikmodule mit einer im Vergleich hohen Modulausgangsspannung verwendet werden, da hierdurch in vorteilhafter Weise die vorhergehend erläuterten kleinen Photovoltaikanlagen mit einer gewünschten Ausgangsleistung hergestellt werden können.

Die vorgeschlagene Teilanordnung und Anordnung zur Halterung kann als raumumschließende Anordnung für andere Zwecke, wie beispielsweise zur Herstellung eines Carports, eines Stalls oder eines Lagerraumes dienen.

Beschrieben werden auch die einzelnen Bestandteile einer Teilanordnung, insbesondere ein Halteprofilelement, ein Oberseitenverbindungselement und ein Unterseitenverbindungselement, wobei diese Bestandteile derart ausgebildet sind, dass eine Teilanordnung oder eine Anordnung zur Halterung gemäß einer der in dieser Erfindung beschriebenen Ausführungsformen herstellbar ist.

Beschrieben wird auch ein Verfahren zur Herstellung eines Photovoltaiksystems, wobei mindesten zwei Teilanordnungen gemäß einer der in dieser Erfindung beschriebenen Ausführungsformen bereitgestellt und beabstandet zueinander angeordnet werden. Weiter wird ein Photovoltaikmodul an einem Halteprofilelement einer ersten Teilanordnung und an einem Halteprofilelement einer zweiten Teilanordnung, insbesondere an oder auf deren Halteabschnitten, angeordnet. Beispielsweise kann ein erster Randabschnitt oder ein Rahmen im Bereich des ersten Randabschnitts an dem Halteprofilelement der ersten Teilanordnung und ein weiterer Randabschnitt oder Rahmen im Bereich des weiteren Randabschnitts, an dem Halteprofilelement der zweiten Teilanordnung angeordnet werden. Der erste und weitere Randabschnitt können an gegenüberliegenden Seiten des Photovoltaikmoduls angeordnet sein. Dann kann ein erstes Oberseitenverbindungselement mit der Oberseite des Halteprofilelements der ersten Teilanordnung und das erste oder vorzugweise ein weiteres Oberseitenverbindungselement mit der Oberseite des Halteprofilelement der zweiten Teilanordnung verbunden werden, wobei durch die Verbindung der Oberseitenverbindungselemente mit den jeweiligen Oberseiten der Halteprofilelemente das Photovoltaikmodul mit den Halteprofilelementen verbunden wird.

Die Erfindung wird anhand eines Ausführungsbeispiels näher erläutert. Die Figuren zeigen:
- Fig. 1: einen schematischen Querschnitt durch eine erfindungsgemäße Teilanordnung,
- Fig. 2: eine schematische Seitenansicht einer erfindungsgemäßen Teilanordnung in einer weiteren Ausführungsform,
- Fig. 3: eine schematische Seitenansicht einer erfindungsgemäßen Teilanordnung in einer weiteren Ausführungsform,
- Fig. 4: eine schematische Seitenansicht einer erfindungsgemäßen Teilanordnung,
- Fig. 5: einen schematischen Querschnitt durch eine erfindungsgemäße Anordnung zur Halterung,
- Fig. 6a: einen schematischen Längsschnitt durch eine erfindungsgemäße Teilanordnung in einer weiteren Ausführungsform,
- Fig. 6b: einen schematischen Längsschnitt durch eine erfindungsgemäße Teilanordnung in einer weiteren Ausführungsform und
- Fig. 7: einen schematischen Querschnitt durch eine erfindungsgemäße Teilanordnung in einer weiteren Ausführungsform.

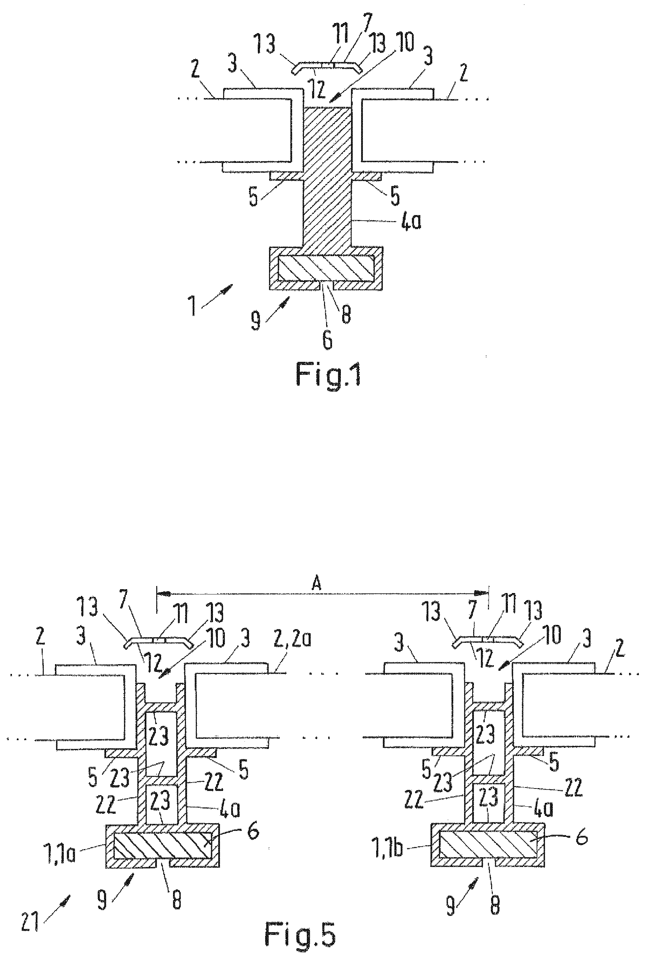

Fig. 1 zeigt einen schematischen Querschnitt durch eine erfindungsgemäße Teilanordnung 1 zur Halterung von Photovoltaikmodulen 2. Die Photovoltaikmodule 2 sind gerahmte Photovoltaikmodule 2 und weisen im Randbereich der Längs- und Querseiten einen Rahmen 3 auf. Der Rahmen 3 kann insbesondere aus Aluminium bestehen, der mit einer Isolationsschicht, beispielsweise einer Eloxalschicht, beschichtet ist.

Die Teilanordnung 1 umfasst ein erstes Halteprofilelement 4a. Dieses bildet Halteabschnitte 5 zur Halterung der Photovoltaikmodule 2 aus. Die Halteabschnitte 5 sind insbesondere als abkragende Stege ausgebildet, die eine Auflagefläche für die Rahmen 3 der Photovoltaikmodule 2 aufweisen. In Fig. 1 ist dargestellt, dass an gegenüberliegenden Seiten des ersten Halteprofilelements 4a jeweils ein Photovoltaikmodul 2 angeordnet ist.

Weiter umfasst die Teilanordnung 1 ein Unterseitenverbindungselement 6 sowie ein Oberseitenverbindungselement 7.

Das Unterseitenverbindungselement 6 ist in einer Aufnahmenut 8 des ersten Halteprofilelements 4a angeordnet, die an einer Unterseite 9 des ersten Halteprofilelements 4a von diesem ausgebildet wird. Die Aufnahmenut 8 kann hierbei als so genannte T-Nut ausgebildet sein. Durch die Aufnahme in diese Nut 8 ist das Unterseitenverbindungselement 6 mit der Unterseite 9 des ersten Halteprofilelements 4a verbunden. Nicht in Fig. 1 dargestellt sind Gewindebohrungen des Unterseitenverbindungselements 6, in die Schrauben zum Befestigen des Unterseitenverbindungselements 6 an der Unterseite 9 eingeschraubt werden können.

Weiter dargestellt ist ein Oberseitenverbindungselement 7, welches in Fig. 1 nicht im verbundenen Zustand dargestellt ist. Dieses kann mittels einer nicht dargestellten Schraube, insbesondere einer selbstschneidenden Schraube, mit einer Oberseite 10 des ersten Halteprofilelements 4a verbunden werden. Für diese Schraube kann das Oberseitenverbindungselement 7 eine Durchgangsöffnung 11 aufweisen. Weiter dargestellt ist, dass das Oberseitenverbindungselement 7 an einer Unterseite Kontaktflächen 12 zur mechanischen Kontaktierung einer Oberseite der Rahmen 3 aufweist. Im Randbereich dieser Kontaktfläche 12 ist das Oberseitenverbindungselement 7 abgekantet. Die hierdurch entstehenden Kanten 13 dringen beim Befestigen des Oberseitenverbindungselements 7 an der Oberseite 10 des ersten Halteprofilelements 4a durch die Isolationsschicht der Rahmen 3, wodurch diese elektrisch durch das Oberseitenverbindungselement 7 kontaktiert werden können. Das erste Halteprofilelement 4a kann insbesondere aus Aluminium ausgebildet sein. Das Unterseitenverbindungselement 6 und das Oberseitenverbindungselement 7 können aus Edelstahl, insbesondere als Edelstahlblech, ausgebildet sein.

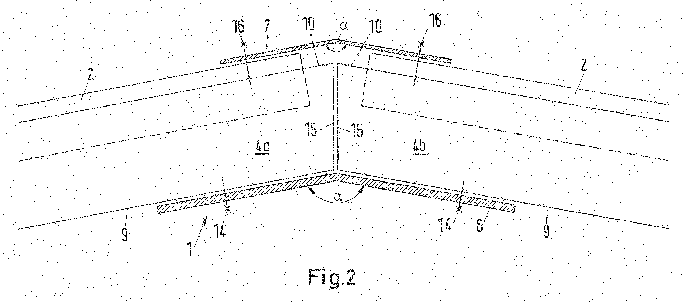

Fig. 2 zeigt eine schematische Seitenansicht einer erfindungsgemäßen Teilanordnung 1 in einer weiteren Ausführungsform. Dargestellt ist ein erstes Halteprofilelement 4a und ein weiteres Halteprofilelement 4b. Ebenfalls dargestellt sind Photovoltaikmodule 2, die an den Halteprofilelementen 4a, 4b angeordnet und durch ein Oberseitenverbindungselement 7 an den Halteprofilelementen 4a, 4b befestigt sind.

Die Teilanordnung 1 umfasst ein Unterseitenverbindungselement 6, welches als Winkelblech ausgebildet ist. Das Winkelblech umfasst zwei Schenkel, die mit einem gewünschten Winkel α abgewinkelt zueinander angeordnet sind. Das Unterseitenverbindungselement 6 ist über schematisch dargestellte Schrauben 14 an den Unterseiten 9 der Halteprofilelemente 4a, 4b mit diesen verbunden. Hierbei ist ein erster Schenkel des Unterseitenverbindungselements 6 mit der Unterseite 9 des ersten Halteprofilelements 4a verbunden und der zweite Schenkel mit der Unterseite des weiteren Halteprofilelements 4b.

In Fig. 2 ist dargestellt, dass auch die Halteprofilelemente 4a, 4b mit dem gewünschten Winkel α abgewinkelt zueinander angeordnet sind. Hierbei weisen die Halteprofilelemente 4a, 4b jeweils abgeschrägte stirnseitige Enden 15 auf.

Weiter dargestellt ist ein Oberseitenverbindungselement 7, welches ebenfalls über schematisch dargestellte Schrauben 16 mit Oberseiten 10 der Halteprofilelemente 4a, 4b verbunden ist. Auch das Oberseitenverbindungselement 7 ist als Winkelblech ausgebildet, welches zwei mit dem gewünschten Winkel α zueinander abgewinkelte Schenkel aufweist. Ein erster Schenkel ist hierbei mit der Oberseite 10 des ersten Halteprofilelements 4a und der weitere Schenkel mit der Oberseite 10 des weiteren Halteprofilelements 4b verbunden.

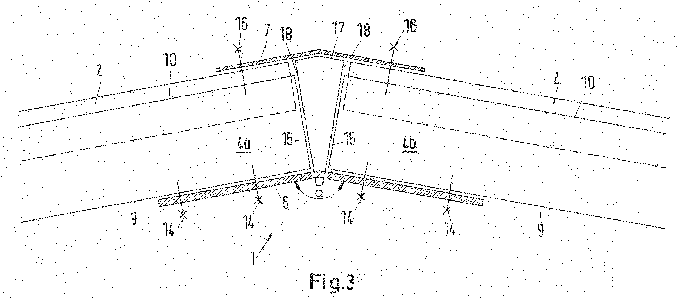

In Fig. 3 ist eine schematische Seitenansicht einer erfindungsgemäßen Teilanordnung 1 in einer weiteren Ausführungsform dargestellt. Im Unterschied zu der in Fig. 3 dargestellten Ausführungsform weisen die Halteprofilelemente 4a, 4b keine abgeschrägten Enden 15 auf. Die Teilanordnung 1 umfasst ein Element 17 zur Einstellung des gewünschten Winkels α zwischen den Halteprofilelementen 4a, 4b. Das Element 17 zur Einstellung des Winkels α ist vollprofilförmig ausgebildet und weist zwei abgewinkelt zueinander angeordnete Kontaktflächen 18 auf, an denen jeweils ein freies Ende 15 eines Halteprofilelements 4a, 4b anliegt.

In Fig. 3 ist dargestellt, dass das Unterseitenverbindungselement 6 eine zentrale Durchgangsöffnung aufweist, durch die das Element 17 hindurchragt.

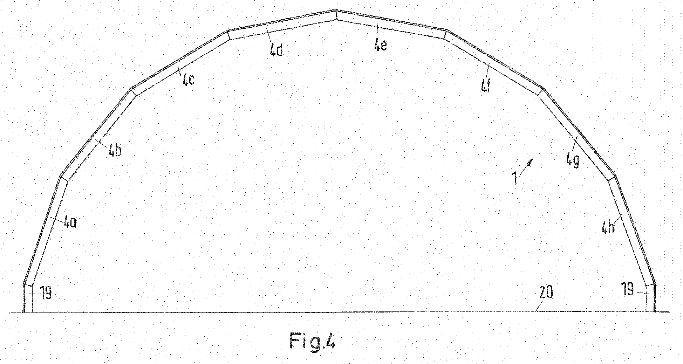

In Fig. 4 ist eine Seitenansicht einer Teilanordnung 1 dargestellt, die im Wesentlichen halbkreisförmig ausgebildet ist. Hierbei sind Halteprofilelemente 4a, 4b, 4c, 4d, 4e, 4f, 4g, 4h derart über nicht dargestellte Unterseitenverbindungselemente und Oberseitenverbindungselemente miteinander verbunden, dass ein Polygon gebildet wird, welches eine Halbkreisform annähert. An den Halteprofilelementen 4a, ... 4h können dann mittels der Oberseitenverbindungselemente Photovoltaikmodule 2 (siehe z.B. Fig. 1) befestigt werden, die sich von der in Fig. 4 dargestellten Teilanordnung 1 hin zu einer beabstandet angeordneten weiteren Teilanordnung erstrecken, wobei diese in einer Richtung senkrecht zur Zeichenebene von der dargestellten Teilanordnung 1 beabstandet angeordnet ist. Somit werden die beiden Teilanordnungen über die Photovoltaikmodule 2 aneinander befestigt, wodurch ein stabiles, biegesteifes Photovoltaiksystem ausgebildet wird. Weiter dargestellt sind Verbindungselemente 19 zur Verbindung der freien Enden der End-Halteprofilelemente 4a, 4h mit einem Fundament, insbesondere dem Erdboden 20.

Fig. 5 zeigt einen schematischen Querschnitt durch eine erfindungsgemäße Anordnung 21 zur Halterung. Dargestellt sind eine erste und eine zweite Teilanordnung 1a, 1 b der Anordnung 21. Die Anordnung 21 kann selbstverständlich noch weitere Teilanordnungen 1 umfassen.

Die Teilanordnungen 1a, 1 b sind in großen Teilen entsprechend der in Fig. 1 dargestellten Ausführungsform der Teilanordnung 1 ausgebildet. Daher wird auf die entsprechenden Ausführungen zu Fig. 1 verwiesen.

Im Unterschied zur der in Fig. 1 dargestellten Ausführungsform der Teilanordnung 1 sind die in Fig. 5 dargestellten Halteprofilelemente 4a als Hohlkörper ausgebildet. Hierbei weist ein Halteprofilelement 4a jeweils zwei Seitenwände 22 auf, wobei an jeder Seitenwand 22 jeweils ein Halteabschnitt 5 zur Halterung bzw. Auflage eines Rahmens 3 eines Photovoltaikmoduls 2 angeordnet ist. Die Seitenwände 22 sind durch jeweils drei Verbindungsstege 23 verbunden. Ein unterer Verbindungssteg 23 ist Teil einer Wand, die die als T-Nut ausgebildete Aufnahmenut 8 umfasst. Zwischen den Verbindungsstegen 23 und den Seitenwänden 22 sind somit Hohlräume ausgebildet. Weiter ist dargestellt, dass ein oberster Verbindungssteg 23 beabstandet vom oberen Ende der Seitenwände 22 angeordnet ist, sodass am oberen Ende eine weitere Nut des Halteprofilelements 4a ausgebildet wird. Durch eine solche Ausbildung des Halteprofilelements 4a ergibt sich in vorteilhafter Weise eine Führung für eine selbstschneidende oder materialverdrängende Schraube durch die Durchgangsöffnung 11.

Weiter ist dargestellt, dass das Halteprofilelement 4a der ersten Teilanordnung 1 a mit einem Abstand A beabstandet von dem Halteprofilelement 4a der zweiten Teilanordnung 1 b angeordnet ist. Der Abstand A kann hierbei zwischen zentralen Symmetrieachsen der Halteprofilelemente 4a gemessen werden.

Zwischen den Halteprofilelementen 4a der ersten und zweiten Teilanordnung 1 a, 1 b ist ein Photovoltaikmodul 2a angeordnet. Hierbei liegt ein an einer linken Längsseite des Photovoltaikmoduls 2a angeordneter Rahmen 3 auf einem Halteabschnitt 5 des Halteprofilelements 4a der ersten Teilanordnung 1 auf. Ein an einer rechten Längsseite des Photovoltaikmoduls 2a angeordneter Rahmen 3 liegt auf einem Halteabschnitt 5 des Halteprofilelements 4a der zweiten Teilanordnung 1 b auf.

Ist das Photovoltaikmodul 2a über Oberseitenverbindungselemente 7 sowohl mit dem Halteprofilelement 4a der ersten Teilanordnung 1a als auch mit dem Halteprofilelement 4a der zweiten Teilanordnung 1 b verbunden, so wird ein biegesteifes, selbsttragendes Photovoltaiksystem bereitgestellt.

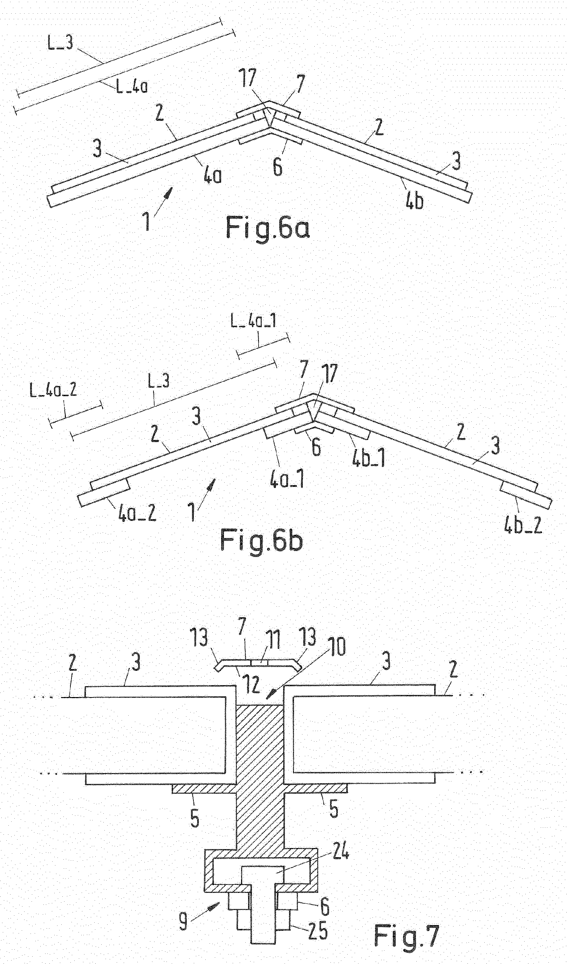

Fig. 6a und Fig. 6b zeigen schematische Längsschnitte durch erfindungsgemäße Teilanordnungen 1 in verschiedenen Ausführungsformen.

In Fig. 6a sind die Längen L_4a der Halteprofilelemente 4a, 4b länger als eine Länge L_3 der durch die ersten Halteprofilelemente 4a, 4b jeweils gehalterten Abschnitte des Rahmens 3 des Photovoltaikmoduls 2. Z.B. ist eine Länge L_4a des ersten Halteprofilelements 4a und somit auch eine Länge des Halteabschnitts 5 (siehe z.B. Fig. 1) länger als eine Länge L_3 des durch das erste Halteprofilelement 4a gehalterten Abschnitts des Rahmens 3, wobei der Abschnitt des Rahmens 3 an einer Längs- oder einer Stirnseite des Photovoltaikmoduls 2 angeordnet ist. Somit liegt der an der Längs- oder Stirnseite des Photovoltaikmoduls 2 angeordnete Abschnitt des Rahmens 3 entlang seiner gesamten Länge L_3 auf der von dem Halteabschnitt 5 ausgebildeten Auflagefläche auf.

In Fig. 6b sind die Längen der Halteprofilelemente 4a, 4b kürzer als eine Länge der durch die ersten Halteprofilelemente 4a, 4b jeweils gehalterten Abschnitte des Rahmens 3 des Photovoltaikmoduls 2. Hierbei umfasst das erste Halteprofilelemente 4a zwei Teilprofilelemente 4a_1, 4a_2, die jeweils Endabschnitte eines an einer Längs- oder Stirnseite des Photovoltaikmoduls 2 angeordneten Abschnitts des Rahmens 3 haltern. Ebenso umfasst das weitere Halteprofilelemente 4b zwei Teilprofilelemente 4b_1, 4b_2, die jeweils Endabschnitte eines an einer Längs- oder Stirnseite des Photovoltaikmoduls 2 angeordneten Abschnitts des Rahmens 3 haltern.

Z.B. ist eine Länge L_4a_1 eines ersten Teilelements 4a_1 des ersten Halteprofilelements 4a und eine Länge L_4a_2 eines zweiten Teilelements 4a_2 des ersten Halteprofilelements 4a und somit auch eine Länge der jeweiligen Halteabschnitte 5 (siehe z.B. Fig. 1) jeweils kürzer als eine Länge L_3 des durch das erste Halteprofilelement 4a gehalterten Abschnitts des Rahmens 3, wobei der Abschnitt des Rahmens 3 an einer Längs- oder einer Stirnseite des Photovoltaikmoduls 2 angeordnet ist. Auch eine Summe der Länge L_4a_1 eines ersten Teilelements 4a_1 des ersten Halteprofilelements 4a und der Länge L_4a_2 eines zweiten Teilelements 4a_2 des ersten Halteprofilelements 4a ist kürzer als die Länge L_3 des durch das erste Halteprofilelement 4a gehalterten Abschnitts des Rahmens 3.

Somit liegt der an der Längs- oder Stirnseite des Photovoltaikmoduls 2 angeordnete Abschnitt des Rahmens 3 nicht entlang seiner gesamten Länge L_3 sondern nur im Bereich der Enden auf der von den Halteabschnitten 5 ausgebildeten Auflageflächen auf.

Fig. 7 zeigt einen Querschnitt durch eine erfindungsgemäße Teilanordnung 1 in einer weiteren Ausführungsform. Die in Fig. 7 dargestellte Ausführungsform entspricht im Wesentlichen der in Fig. 1 dargestellten Ausführungsform, sodass auf die entsprechenden Ausführungen zu Anspruch 1 verwiesen werden kann.

Im Unterschied zu der in Fig. 1 dargestellten Ausführungsform ist das Unterseitenverbindungselement 6 an der Unterseite 9 des ersten Halteprofilelements 4a außerhalb der Aufnahmenut 8 des ersten Halteprofilelements 4a angeordnet. In der Aufnahmenut 8 ist ein Teil einer Hammerkopfschraube 24, insbesondere deren Kopfteil, angeordnet. In diesem Fall kann das Unterseitenverbindungselement 6 eine Durchgangsöffnung für die Hammerkopfschraube 24 aufweisen. Weiter dargestellt ist eine Mutter 25, die zum Befestigen des Unterseitenverbindungselements 6 an der Unterseite 9 dient, auf dem Gewindeabschnitt der Hammerkopfschraube 24 aufgeschraubt ist.

### Bezugszeichenliste

- 1: Teilanordnung
- 2, 2a: Photovoltaikmodul
- 3: Rahmen
- 4a, ... 4h: Halteprofilelemente
- 4a_1, 4a_2: Teilelemente eines Halteprofilelements
- 4b_1, 4b_2: Teilelemente eines Halteprofilelements
- 5: Halteabschnitte
- 6: Unterseitenverbindungselement
- 7: Oberseitenverbindungselement
- 8: Aufnahmenut
- 9: Unterseite
- 10: Oberseite
- 11: Durchgangsöffnung
- 12: Kontaktfläche
- 13: Kante
- 14: Schraube
- 15: freies Ende
- 16: Schraube
- 17: Element zur Einstellung eines Winkels
- 18: Kontaktfläche
- 19: Verbindungselement
- 20: Erdboden
- 21: Anordnung zur Halterung
- 22: Seitenwand
- 23: Verbindungssteg
- 24: Hammerkopfschraube
- 25: Mutter
- A: Abstand
- L_3: Länge eines Abschnitts des Rahmens
- L_4a: Länge eines Halteprofilelements
- L_4a_1: Länge eines ersten Teilelements eines Halteprofilelements
- L_4a_2: Länge eines zweiten Teilelements eines Halteprofilelements

## Patentansprüche

1. Teilanordnung zur Halterung mindestens eines Photovoltaikmoduls (2),
wobei die Teilanordnung (1, 1a, 1 b) ein erstes Halteprofilelement (4a) und mindestens ein weiteres Halteprofilelement (4b, ..., 4h) umfasst,
**dadurch gekennzeichnet, dass**
die Teilanordnung (1, 1a, 1b) mindestens ein erstes Unterseitenverbindungselement (6) und mindestens ein erstes Oberseitenverbindungselement (7) umfasst, wobei das erste Unterseitenverbindungselement (6) mit Unterseiten (9) des ersten und weiteren Halteprofilelements (4a, 4b) verbunden ist, wobei das erste Oberseitenverbindungselement (7) mit Oberseiten (10) des ersten und weiteren Halteprofilelements (4a, 4b) verbunden ist, wobei das erste Oberseitenverbindungselement (7) derart ausgebildet und mit den Halteprofilelementen (4a, 4b) verbindbar ist, dass ein durch das erste Halteprofilelement (4a) halterbares Photovoltaikmodul (2) und/oder ein durch das weitere Halteprofilelement (4b) halterbares Photovoltaikmodul (2) durch das erste Oberseitenverbindungselement (7) mit dem/den Halteprofilelement/en (4a, 4b) verbindbar ist.

2. Teilanordnung nach einem der vorangegangenen Ansprüche, **dadurch gekennzeichnet, dass** das erste und weitere Halteprofilelement (4a, 4b) mit einem gewünschten Winkel (α) abgewinkelt zueinander angeordnet sind.

3. Teilanordnung nach einem der vorangegangenen Ansprüche, **dadurch gekennzeichnet, dass** mindestens ein freies Ende (15) des ersten und weiteren Halteprofilelements (4a, 4b) abgeschrägt ist.

4. Teilanordnung nach einem der vorangegangenen Ansprüche, **dadurch gekennzeichnet, dass** die Teilanordnung (1, 1a, 1 b) ein Element (17) zur Einstellung des gewünschten Winkels (α) zwischen zwei Halteprofilelementen (4a, 4b) umfasst, wobei das Element (17) zur Einstellung des gewünschten Winkels (α) zwischen freien Enden (15) der Halteprofilelemente (4a, 4b) angeordnet ist.

5. Teilanordnung nach einem der vorangegangenen Ansprüche, **dadurch gekennzeichnet, dass** das erste Unterseitenverbindungselement (6) und/oder das erste Oberseitenverbindungselement (7) als Winkelprofilelement ausgebildet ist/sind.

6. Teilanordnung nach einem der vorangegangenen Ansprüche, **dadurch gekennzeichnet, dass** das erste Oberseitenverbindungselement (7) mindestens ein Kontaktmittel zur elektrischen Kontaktierung eines Rahmens (3) des Photovoltaikmoduls (2) aufweist oder ausbildet.

7. Teilanordnung nach Anspruch 6, **dadurch gekennzeichnet, dass** das Oberseitenverbindungselement (7) einen Kontaktabschnitt zur mechanischen Kontaktierung eines Rahmens (3) des Photovoltaikmoduls (2) aufweist oder ausbildet, wobei das Kontaktmittel von dem Kontaktabschnitt ausgebildet wird oder daran angeordnet ist.

8. Teilanordnung nach einem der vorangegangenen Ansprüche, **dadurch gekennzeichnet, dass** die Halteprofilelemente (4a, 4b) und das Oberseitenverbindungselement (7) aus elektrisch leitfähigem Material bestehen.

9. Teilanordnung nach einem der vorangegangenen Ansprüche, **dadurch gekennzeichnet, dass** die Teilanordnung (1, 1a, 1 b) elektrisch mit einem Referenzpotential verbunden ist.

10. Teilanordnung nach einem der vorangegangenen Ansprüche, **dadurch gekennzeichnet, dass** die Teilanordnung (1, 1a, 1 b) mindestens ein End-Unterseitenverbindungselement umfasst, wobei das End-Unterseitenverbindungselement mit einer Unterseite eines End-Halteprofilelements verbunden ist, wobei das End-Unterseitenverbindungselement mit einem Fundament verbunden ist.

11. Teilanordnung nach einem der vorangegangenen Ansprüche, **dadurch gekennzeichnet, dass** Halteprofilelemente (4a, ..., 4h) derTeilanordnung (1, 1a, 1b) derart ausgebildet und angeordnet sind, dass die Halteprofilelemente (4a, ..., 4h) eine im Wesentlichen bogenförmige Teilanordnung (1, 1a, 1 b) zur Halterung ausbilden.

12. Teilanordnung nach einem der vorangegangenen Ansprüche, **dadurch gekennzeichnet, dass** eine Länge (L_4a) eines Halteprofilelements (4a, ..., 4h) größer als die Länge, gleich der Länge oder kleiner als die Länge der durch das Halteprofilelement (4a,...,4h) gehalterten Seite des Photovoltaikmoduls (2) ist.

13. Teilanordnung nach einem der vorangegangenen Ansprüche, **dadurch gekennzeichnet, dass** ein Halteprofilelement (4a,...,4h) an der Unterseite (9) eine Aufnahmenut (8) aufweist, wobei das Unterseitenverbindungselement (6) in oder außerhalb der Aufnahmenut (8) angeordnet ist.

14. Anordnung zur Halterung mindestens eines Photovoltaikmoduls, **dadurch gekennzeichnet, dass** die Anordnung (21) mindestens zwei Teilanordnungen (1a, 1 b) gemäß einem der Ansprüche 1 bis 13 umfasst, wobei eine erste Teilanordnung (1 a) beabstandet zu einer zweiten Teilanordnung (1b) angeordnet ist.

15. Anordnung nach Anspruch 14, **dadurch gekennzeichnet, dass** mindestens ein Unterseitenverbindungselement der ersten Teilanordnung (1a) ein Unterseitenverbindungselement der zweiten Teilanordnung (1b) bildet und/oder mindestens ein Oberseitenverbindungselement der ersten Teilanordnung (1a) ein Oberseitenverbindungselement der zweiten Teilanordnung (1 b) bildet.

16. Anordnung nach einem der Ansprüche 14 bis 15, **dadurch gekennzeichnet, dass** mindestens ein Photovoltaikmodul (2) von einem Halteprofilelement (4a) der ersten Teilanordnung (1a) und einem Halteprofilelement der zweiten Teilanordnung (1 b) gehaltert wird.

17. Verfahren zur Montage einer Teilanordnung (1, 1a, 1b) zur Halterung mindestens eines Photovoltaikmoduls (2), wobei ein erstes Halteprofilelement (4a), mindestens ein weiteres Halteprofilelement (4b, ..., 4h), mindestens ein Unterseitenverbindungselement (6) und mindestens ein Oberseitenverbindungselement (7) bereitgestellt wird, wobei das erste Unterseitenverbindungselement (6) mit Unterseiten (9) des ersten und weiteren Halteprofilelements (4a, 4b) verbunden wird, wobei das erste Oberseitenverbindungselement (7) mit Oberseiten (10) des ersten und weiteren Halteprofilelements (4a, 4b) verbunden wird.

18. Verfahren nach Anspruch 17, **dadurch gekennzeichnet, dass** vor der Verbindung des Oberseitenverbindungselement (7) mit den Oberseiten (10) des ersten und weiteren Halteprofilelements (4a, 4b) jeweils mindestens ein Photovoltaikmodul (2) an den Halteprofilelementen (4a, 4b) angeordnet wird, wobei durch die Verbindung des Oberseitenverbindungselements (7) mit den Oberseiten (10) der Halteprofilelemente (4a, 4b) die Photovoltaikmodule (2) mit den Halteprofilelementen (4a, 4b) verbunden werden.

19. Verfahren nach Anspruch 18, **dadurch gekennzeichnet, dass** durch die Verbindung des Oberseitenverbindungselements (7) mit den Oberseiten (10) der Halteprofilelemente (4a, 4b) ein Rahmen (3) eines Photovoltaikmoduls (2) elektrisch kontaktiert wird.
